(19) Europäisches Patentamt
European Patent Office
Office européen des brevets

(11) EP 0 530 335 B1

(12) EUROPÄISCHE PATENTSCHRIFT

(45) Veröffentlichungstag und Bekanntmachung des Hinweises auf die Patenterteilung:
**14.08.1996 Patentblatt 1996/33**

(21) Anmeldenummer: **92905278.5**

(22) Anmeldetag: **12.03.1992**

(51) Int Cl.[6]: **C07F 9/40**, C07F 9/42, C07F 9/50

(86) Internationale Anmeldenummer:
**PCT/CH92/00050**

(87) Internationale Veröffentlichungsnummer:
**WO 92/16535 (01.10.1992 Gazette 1992/25)**

(54) **DIPHOSPHONSAUREDERIVATE ALS ZWISCHENPRODUKTE ZUR HERSTELLUNG VON DIPHOSPHINLIGANDEN**

DIPHOSPHONIC ACID DERIVATES AS INTERMEDIATES FOR THE PRODUCTION OF DIPHOSPHINE LIGANDS

DERIVES D'ACIDE DIPHOSPHONIQUE UTILES COMME PRODUITS INTERMEDIAIRES LORS DE LA PREPARATION DE LIGANDS DIPHOSPHINIQUES

(84) Benannte Vertragsstaaten:
**AT BE CH DE DK FR GB IT LI NL SE**

(30) Priorität: **15.03.1991 CH 794/91**

(43) Veröffentlichungstag der Anmeldung:
**10.03.1993 Patentblatt 1993/10**

(73) Patentinhaber: **F. HOFFMANN-LA ROCHE AG
4002 Basel (CH)**

(72) Erfinder:
- **FORICHER, Joseph
F-68200 Mulhouse (FR)**
- **HEISER, Bernd
D-7854 Inzlingen (DE)**
- **SCHMID, Rudolf
CH-4142 Münchenstein (CH)**

(74) Vertreter: **Cottong, Norbert A.
F.Hoffmann-La Roche AG
Patent Department (PLP),
124 Grenzacherstrasse
4070 Basel (CH)**

(56) Entgegenhaltungen:
**EP-A- 0 398 132** **FR-A- 2 140 659**

EP 0 530 335 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft neue, racemische und optisch aktive Phosphorverbindungen der allgemeinen Formel

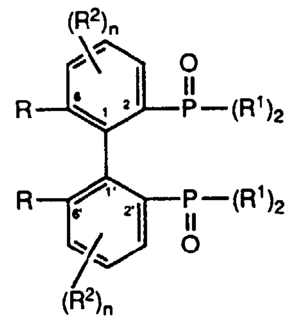

I

worin R niederes Alkyl, niederes Alkoxy oder geschütztes Hydroxy bedeutet, $R^1$ niederes Alkoxy, Phenoxy, Benzyloxy, Chlor oder Brom bedeutet, $R^2$ für niederes Alkyl oder niederes Alkoxy steht und n die Zahl 0,1 oder 2 darstellt.

Die Erfindung betrifft ferner die Herstellung der Phosphorverbindungen der Formel I. Aus EP-A-398 132 ist bekannt, dass optisch aktive Diphosphinverbindungen durch Ullmann Kupplung entsprechender Phosphinoxide hergestellt werden können.

Der Ausdruck "niederes Alkyl" bedeutet, im Rahmen der vorliegenden Erfindung, geradkettige oder verzweigte Alkylgruppen mit 1 bis 4 Kohlenstoffatomen wie Methyl, Aethyl, Propyl, Isopropyl, n-Butyl, Isobutyl und tert.Butyl. Der Ausdruck "niederes Alkoxy" bedeutet Gruppen, in denen der Alkylrest die vorhergehende Bedeutung hat. Die Ausdrücke "Phenoxy" und "Benzyloxy" bedeuten, im Rahmen der vorliegenden Erfindung Substituenten, in denen der Phenylrest sowohl unsubstituiert als auch in meta- oder para-Stellung oder auch mehrfach substituiert sein kann. Als Substituenten kommen hier Methylgruppen in Frage. Als Schutzgruppen für die Hydroxygruppe kommen, im Rahmen der vorliegenden Erfindung, insbesondere die üblichen Aether-bildenden Gruppen in Frage, wie z.B. Benzyl, Allyl, Benzyloxymethyl, niederes Alkoxymethyl, 2-Methoxyäthoxymethyl und dergleichen.

Die Phosphorverbindungen der Formel I können sowohl in racemischer als auch in optisch aktiver Form vorliegen. Von denjenigen Verbindungen der Formel I, worin R niederes Alkoxy darstellt, sind die optisch aktiven bevorzugt.

Bevorzugte Verbindungen der Formel I sind zudem solche, worin n für die Zahl 0 steht, $R^1$ Phenoxy, Aethoxy oder Chlor bedeutet und R Methoxy, Methoxymethyl oder Methyl, insbesondere jedoch Methoxy, darstellt.

Besonders bevorzugte Verbindungen der Formel I sind:

(RS)-(6,6'-Dimethoxybiphenyl-2,2'-diyl)bis(phosphonsäure-diphenylester),
(R)- oder (S)-(6,6'-Dimethoxybiphenyl-2,2'-diyl)bis(phosphonsäure-diphenylester),
(RS)-(6,6'-Dimethoxybiphenyl-2,2'-diyl)bis(phosphonsäure-diäthylester),
(R)- oder (S)-(6,6'-Dimethoxybiphenyl-2,2'-diyl)bis(phosphonsäure-diäthylester),
(RS)-[6,6'-Bis(methoxymethoxy)biphenyl-2,2'-diyl]bis(phosphonsäure-diphenylester),
(R)- oder (S)-[6,6'-Bis(methoxymethoxy)biphenyl-2,2'-diyl]bis(phosphonsäure-diphenylester),
(RS)-(6,6'-Dimethylbiphenyl-2,2'-diyl)bis(phosphonsäure-diphenylester),
(R)- oder (S)-(6,6'-Dimethylbiphenyl-2,2'-diyl)bis(phosphonsäure-diphenylester),
(RS)-(6,6'-Dimethylbiphenyl-2,2'-diyl)bis(phosphonsäure-diäthylester),
(R) oder (S)-(6,6'-Dimethylbiphenyl-2,2'-diyl)bis(phosphonsäure-diäthylester),
(RS)-(6,6'-Dimethoxybiphenyl-2,2'-diyl)bis(phosphonsäure-dichlorid),
(R)- oder (S)-(6,6'-Dimethoxybiphenyl-2,2'-diyl)bis(phosphonsäure-dichlorid).

Die erfindungsgemässen Verbindungen der Formel I können beispielsweise dadurch hergestellt werden, dass man eine Verbindung der Formel

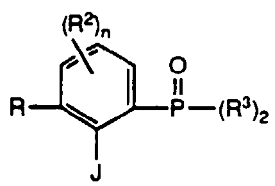

II

worin R, $R^2$ und n obige Bedeutung haben, und $R^3$ niederes Alkoxy,

Phenoxy oder Benzyloxy bedeutet,
einer Ullmann-Kopplung unterwirft, dass man, gewünschtenfalls, eine so erhaltene, in der (RS)-Form vorliegende Verbindung der Formel

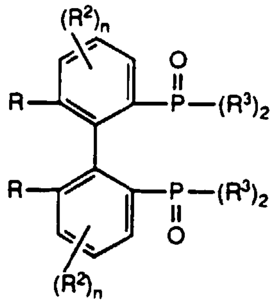

III

worin R, $R^2$, $R^3$ und n obige Bedeutung haben,
mittels Dibenzoylweinsäure oder Di-p-Toluylweinsäure in die (R)- und (S)-Form auftrennt, und dass man, gewünschtenfalls, in einer racemischen oder optisch aktiven Verbindung der Formel III, worin $R^3$ niederes Alkoxy darstellt, dieses durch Chlor oder Brom ersetzt.

Die Ueberführung einer Verbindung der Formel II in eine, in (RS)-Form vorliegende Verbindung der Formel III erfolgt erfindungsgemäss mittels einer Ullmann-Kopplung. Es handelt sich hierbei um eine an sich bekannte Reaktion, welche unter den hierfür üblichen Bedingungen durchgeführt werden kann. So kann diese Reaktion beispielsweise durch Erhitzen einer Verbindung der Formel II in einem inerten organischen Lösungsmittel, wie z.B. N,N-Dimethylformamid, mit z.B. mit Jod aktiviertem Kupferpulver auf eine Temperatur von etwa 110°C bis etwa 200°C, durchgeführt werden. Gegebenenfalls kann die Reaktion auch ohne Lösungsmittel, d.h. in der Schmelze durchgeführt werden.

Die als Ausgangsmaterial verwendeten Verbindungen der allgemeinen Formel II sind neu, und somit ebenfalls Gegenstand der vorliegenden Erfindung. Sie können, sofern R verschieden ist von niederem Alkyl, beispielsweise dadurch hergestellt werden, dass man eine Verbindung der allgemeinen Formel

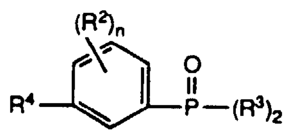

IV

worin $R^2$, $R^3$ und n obige Bedeutung haben, und $R^4$ niederes Alkoxy
oder geschütztes Hydroxy bedeutet, einer ortho-Lithiierungs-/Jodierungs-Reaktion unterwirft.

Die ortho-Lithiierung einer Verbindung der Formel IV kann in an sich bekannter Weise erfolgen. Beispielsweise kann diese Reaktion durch Umsetzung einer Verbindung der Formel IV mit einem Lithiumamid, z.B. Lithiumdiisopropylamid oder Lithium-2,2,6,6-tetramethylpiperidid in Tetrahydrofuran bei einer Temperatur unterhalb 0°C, vorzugsweise bei etwa -50°C bis etwa -78°C, erfolgen. Die anschliessende Jodierung kann zweckmässig mit molekularem Jod, mit JCl oder JBr, ebenfalls in Tetrahydrofuran und ebenfalls bei einer Temperatur unterhalb -50°C, erfolgen.

Diejenigen Ausgangsmaterialien der Formel II, worin R niederes Alkyl bedeutet, können beispielsweise ausgehend von einer Verbindung der Formel

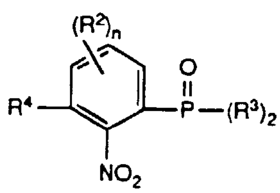

V

worin $R^2$, $R^3$ und n obige Bedeutung haben, und $R^4$ niederes Alkyl darstellt,
hergestellt werden.

Dies erfolgt zweckmässig durch allgemein bekannte Reduktion der Nitrogruppe zur Aminogruppe, z.B. mittels Wasserstoff in Gegenwart eines Katalysators wie etwa Pd/C, und anschliessende Diazotierung/Jodierung in an sich bekannter Weise.

Die hiervor wiederum als Ausgangsmaterial verwendeten Verbindungen der Formel IV und V sind bekannte Verbindungen oder Analoge bekannter Verbindungen, welche leicht in an sich bekannter Weise hergestellt werden können. Verbindungen IV z.B. gemäss [J.J. Monagle et al., J. Org. Chem. 32 2477 (1967)]. Verbindungen V z.B. gemäss K.S. Petrakis et al., J. Am. Chem. Soc. 1987, 109, 2831.

Die Racematspaltung einer in der (RS)-Form vorliegenden Verbindung der Formel III mittels (-)- bzw. (+)-O,O'-Dibenzoylweinsäure (DBW) oder (-)-bzw. (+)-O,O'-Di-p-Toluylweinsäure (DTW) kann in für Racematspaltungen von Phosphinoxiden analoger Weise durchgeführt werden, und zwar obwohl dies gemäss Stand der Technik eigentlich nicht zu erwarten war. Dies erfolgt zweckmässig in einem inerten organischen Lösungsmittel und bei einer Temperatur von etwa 0°C bis etwa 60°C. Als Lösungsmittel können hier insbesondere genannt werden Chloroform, Methylenchlorid, Essigsäureäthylester, Essigsäure-isopropylester, Aceton, Alkohole wie Methanol oder Aethanol und dergleichen, sowie auch Gemische davon.

Die so erhaltenen Addukte der Verbindungen der Formel III mit (-)- bzw. (+)-DBW bzw. DTW können anschliessend, in zu Phosphinoxid-Addukten analoger Weise, mit einer anorganischen Base behandelt werden, wobei die jeweilige (R)- bzw- (S)-Form der Verbindungen der Formel III freigesetzt werden.

Sofern in einer racemischen oder optisch aktiven Verbindung der Formel III $R^3$ niederes Alkoxy bedeutet, kann dieses durch Chlor oder Brom ersetzt werden. Diese Substitution kann in an sich bekannter Weise erfolgen, beispielsweise durch Umsetzung mit Thionylchlorid, Thionylbromid oder Phosphorpentachlorid in einem inerten organischen Lösungsmittel.

Alternativ zum im vorhergehend Beschriebenen, können diejenigen Verbindungen der Formel III, worin R niederes Alkyl darstellt, auch ausgehend von Verbindungen der Formel

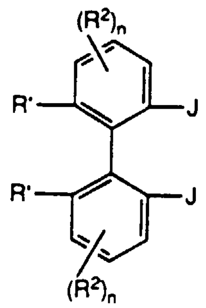

VI

worin $R^2$ und n obige Bedeutung haben und R' niederes Alkyl darstellt,
erhalten werden.

Dies kann in einfacher und an sich bekannter Weise erfolgen, z.B. durch Umsetzung einer Verbindung der Formel VI mit einer Verbindung der Formel

$H-P-(R^3)_2$ bzw. $P(OR^3)_2$
||
O

worin $R^3$ die obige Bedeutung hat,
in Gegenwart eines tert. Amins wie etwa Triäthylamin und eines Katalysators wie z.B. $Pd(P-(Phenyl)_3)_4$, bzw. in Gegenwart eines Katalysators wie z.B. $PdCl_2$ oder auch $NiCl_2$.

Verbindungen der Formel I, insbesondere die optisch aktiven Formen, sind wertvolle Zwischenprodukte in der Herstellung sowohl bekannter als auch neuer Diphosphinliganden. Diese wiederum sind wertvolle Bausteine von Komplexen mit Uebergangsmetallen, insbesondere mit Metallen der Gruppe VIII, wie etwa Ruthenium, Rhodium oder Iridium, welche als Katalysatoren bei u.a. asymmetrischen Hydrierungen dienen.

Die Verbindungen der Formel I können leicht in die erwähnten Diphosphinliganden übergeführt werden. Hierbei ist lediglich zu beachten, dass bei Verwendung von Verbindungen der Formel I, worin $R^1$ niederes Alkoxy bedeutet, dieses bevorzugt zuerst durch Chlor oder Brom ersetzt wird.

Die Ueberführung erfolgt zweckmässig durch Umsetzung mit einer Aryl- oder Heteroaryl-Grignard- oder Lithium-Verbindung der Formel

$R^5MgX$ bzw. $R^5Li$

worin X Chlor, Brom oder Jod darstellt,
wobei man eine Verbindung der Formel

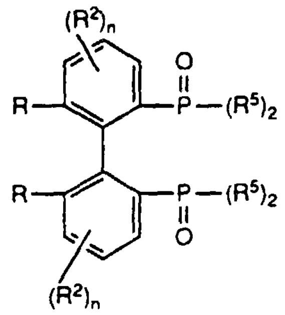

VII

worin R, $R^2$ und n die vorhergehende Bedeutung haben und $R^5$ beispielsweise Phenyl, substituiertes Phenyl, oder auch α-Furyl bedeutet,
erhält, welche anschliessend reduziert wird zu einem Diphosphinliganden der Formel

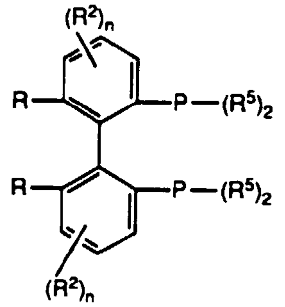

VIII

worin R, $R^2$, n und $R^5$ die vorhergehende Bedeutung haben.

Je nach Bedeutung inbesondere des Substituenten $R^5$ handelt es sich bei den Verbindungen der Formel VIII um bekannte oder um neue Diphosphinliganden.

Die Umsetzung einer Verbindung der Formel I mit $R^5MgX$ oder $R^5Li$ kann in an sich bekannter Weise erfolgen. Vorzugsweise erfolgt dies z.B. unter den üblichen Bedingungen einer Grignard-Reaktion. Hierbei werden vorzugsweise Verbindungen der Formel I, worin $R^1$ Phenoxy darstellt, mit einer Verbindung der Formel $R^5MgX$ umgesetzt, und solche, worin $R^1$ Chlor oder Brom darstellt, mit einer Verbindung der Formel $R^5$-Li oder $R^5MgX$.

Die Reduktion einer racemischen oder in (R)- oder (S)-Form vorliegenden Verbindung der Formel VII kann in an sich bekannter Weise durchgeführt werden. Dies kann beispielsweise mit Silanen, wie z.B. Trichlorsilan, in einem aromatischen Kohlenwasserstoff, wie etwa in siedendem Xylol, oder auch in Acetonitril usw., zweckmässig in Gegenwart einer Hilfsbase, wie etwa Triäthylamin, oder vorzugsweise Tributylamin, erfolgen. Gewünschtenfalls kann diese Reduktion auch in einem Autoklaven unter Druck durchgeführt werden.

Bezüglich der Verbindungen der Formel III, worin R niederes Alkyl darstellt, ist es in der Regel bevorzugt, die Racematspaltung erst auf der Stufe der nachfolgenden Verbindungen der Formeln VII oder VIII durchzuführen. Auch in diesem Fall kann jedoch die Racematspaltung in an sich bekannter Weise durchgeführt werden, z.B. gemäss der von S. Otsuka et al., in J. Am. Chem. Soc. 1971 93, 4301, beschriebenen Methode.

Sämtliche vorhergehend erwähnten Reaktionen - mit Ausnahme der Racematspaltung - werden zweckmässig unter Inertgas, wie z.B. Argon oder Stickstoff, durchgeführt.

In Analogie zur Herstellung und Verwendung der Verbindungen der Formel I, können ebenfalls auch Verbindungen des Binaphthyl-Typus der folgenden Formel

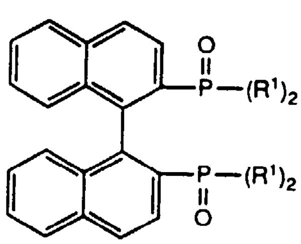

IX

worin $R^1$ obige Bedeutung hat,
hergestellt und verwendet werden. Die Binaphthylringe können hierbei in üblicher Weise substituiert sein.

Die folgenden Beispiele dienen zur Illustrierung der Erfindung und stellen in keiner Weise irgendeine Beschränkung dar. In diesen Beispielen haben die gewählten Abkürzungen folgende Bedeutung:
DC: Dünnschichtchromatographie
DBW: O,O'-Dibenzoylweinsäure
Alle Temperaturen sind in °Celsius angegeben.

Beispiel 1

a) In einem 1 l Vierhalssulfierkolben, versehen mit Kühler, Thermometer, Rührer und Aufsatz für Inertgasbehandlung, wurden unter Argon 76,5 g (0,122 Mol) (2-Jod-3-methoxyphenyl)phosphonsäure-diphenylester (75% rein) und 25,0 g (0,393 Mol) aktiviertes Kupferpulver vorgelegt und 200 ml N,N-Dimethylformamid zufliessen gelassen. Die dunkelbraune Suspension wurde 1 Stunde auf 140° erhitzt (Oelbadtemperatur), wonach gemäss DC-Analyse vollständiger Umsatz eingetreten war. Das abgekühlte Reaktionsgut wurde mit etwas Methylenchlorid in einen Rundkolben transferiert und am Rotationsverdampfer bei 70° zur Trockene eingedampft. Der Rückstand wurde mit 200 ml Methylenchlorid versetzt, die Mischung gut durchgerührt und filtriert, und der Filterrückstand mit 100 ml Methylenchlorid gewaschen. Das Filtrat wurde dreimal mit 100 ml ges. $NH_4Cl$-Lösung gewaschen, wobei bei der ersten Waschoperation von wenig gebildetem Festkörper filtriert wurde, und anschliessend über $MgSO_4$ getrocknet, filtriert und eingeengt. Nach Trocknung am Hochvakuum (- 10 Pa) während 2 Stunden bei 80° erhielt man 59,6 g rohen (RS)-(6,6'-Dimethoxybiphenyl-2,2'-diyl)bis(phosphonsäure-diphenylester).

ba) In einem 1 1 Rundkolben wurde eine Lösung von 59,6 g des rohen, gemäss a) erhaltenen Diphenylesters in 50 ml Dichlormethan vorgelegt und mit einer Lösung von 35,8 g (0,10 Mol) (-)-O,O'-Dibenzoyl-L-weinsäure in 100 ml Essigsäureäthylester versetzt. Die Lösung wurde dann am Rotationsverdampfer bei 600 mbar eingedampft, wobei das $CH_2Cl_2$ abdestillierte und ein weisser Festkörper ausfiel. Dieser wurde abgenutscht, gewaschen mit dreimal 20 ml Essigsäureäthylester und 20 ml Hexan und am Hochvakuum (- 10 Pa) getrocknet. Man erhielt 21,8 g (R)-Diphenylester/(-)-DBW-Addukt als weisses Pulver. $[\alpha]_D,^{20}$ = -95,6 (c = 1 in Aethanol).

Die Mutterlaugen und Waschlösungen wurden zur Gewinnung des anderen Enantiomeren beiseite gestellt.

bb) Das gemäss ba) erhaltene Material wurde in einem 1 l Erlenmeyer mit Magnetrührer mit 100 ml Dichlormethan, 50 ml ges. $NaHCO_3$-Lösung und 50 ml entionisiertem Wasser verrührt, bis aller Festkörper in Lösung gegangen war (30 Minuten). Die Phasen wurden getrennt, und die organische Phase wurde zweimal mit 100 ml halbges. $NaHCO_3$-Lösung, 50 ml entionisiertem Wasser und 50 ml ges. NaCl-Lösung gewaschen, über $MgSO_4$ getrocknet, filtriert und eingedampft. Der ölige Rückstand wurde mit 20 ml tert.-Butylmethyläther versetzt, wobei Kristallisation eintrat. Nach Eindampfen und Trocknen am Hochvakuum (- 10 Pa) während 1 Stunde bei 60° erhielt man 13,8 g (R)-(6,6'-Dimethoxybiphenyl-2,2'-diyl)bis(phosphonsäure-diphenylester) als weisse Kristalle. Smp. 125-125,5°; $[\alpha]_D,^{20}$ = -18,9 (c = 1 in $CHCl_3$).

ca) In einem 1 l Rundkolben wurden die Mutterlaugen und Waschlösungen aus ba) eingedampft. Der Rückstand wurde in 100 ml Dichlormethan aufgenommen und die Lösung während 30 Minuten mit 50 ml ges. $NaHCO_3$Lösung und 50 ml entionisiertem Wasser verrührt. Die Phasen wurden getrennt, und die organische Phase wurde mit 100 ml halbges. $NaHCO_3$-Lösung, 50 ml entionisiertem Wasser und 50 ml ges. NaCl-Lösung gewaschen, über $MgSO_4$ getrocknet, filtriert und eingeengt. Das erhaltene braune Oel wurde in 50 ml Dichlormethan aufgenommen, und die Lösung wurde mit einer Lösung von 18,0 g (0,050 Mol) (+)-O,O'-Dibenzoyl-D-weinsäure in 100 ml Essigsäure-äthylester versetzt. Die Lösung wurde dann am Rotationsverdampfer bei 600 mbar aufkonzentriert, wobei das $CH_2Cl_2$ abdestillierte und ein weisser Festkörper ausfiel. Dieser wurde abgenutscht, dreimal mit 20 ml Essigsäureäthylester und 20 ml Hexan gewaschen und am Hochvakuum (- 10 Pa) getrocknet. Man erhielt 22 g (S)-Diphenylester/(+)-DBW-Addukt als leicht gelbliches Pulver. $[\alpha]_D,^{20}$ = +96 (c = 1 in Aethanol).

cb) Das gemäss ca) erhaltene Material wurde wie in bb) beschrieben aufgearbeitet. Man erhielt 13,9 g (S)-(6,6'-Dimethoxybiphenyl-2,2'-diyl)bis(phosphonsäure-diphenylester) als weisse Kristalle. Smp. 124-125°; $[\alpha]_D,^{20}$ = +18,7 (c = 1 in $CHCl_3$).

d) Der als Ausgangsmaterial verwendete (2-Jod-3-methoxyphenyl)phosphonsäure-diphenylester wurde wie folgt hergestellt:

daa) In einem 0,5 l Vierhalskolben, versehen mit Rührer, Kühler, Thermometer und Aufsatz für Inertgasbehandlung, wurde unter Argon eine Aufschlämmung von 13,0 g (0,535 Mol) Magnesiumspänen in 50 ml getrocknetem Tetrahydrofuran vorgelegt. Hierzu wurde eine Lösung von 93,5 g (0,50 Mol) 3-Bromanisol in 200 ml getrocknetem Tetrahydrofuran innerhalb von 90 Minuten so zugetropft, dass die Reaktionstemperatur 35° nicht überstieg. Nach erfolgter Zugabe wurde zur Vermeidung des Ausfallens des Grignardreagens mit zusätzlichen 150 ml getrocknetem Tetrahydrofuran verdünnt.

dab) In einem 1,5 l Vierhalskolben, versehen mit Rührer, Thermometer, Aufsatz für Inertgasbehandlung und $CO_2$/Aceton-Kühlbad, wurden 259,8 g (0,967 Mol) Diphenyl-chlorphosphat und 200 ml getrocknetes Tetrahydrofuran vorgelegt, und die Lösung auf -78° gekühlt. Dazu wurde nun innerhalb 2 Stunden die Lösung des gemäss baa) bereiteten

Grignardreagens so zugetropft, dass die Reaktionstemperatur -70° nicht überstieg. Nach beendeter Zugabe liess man über Nacht unter Rühren auf Raumtemperatur erwärmen. Die Reaktionsmischung, welche etwas feinen weissen Niederschlag enthielt, wurde in ein 10 l Rührgefäss auf ein Gemisch von 2 l Eiswasser, 2 l ges. $NaHCO_3$-Lösung und 1 l Diäthyläther gegossen. Nach kräftigem Durchrühren während 10 Minuten wurde die wässrige Phase abgetrennt und die organische Phase nacheinander mit 1 l ges. $NaHCO_3$-Lösung, 200 ml 25% Ammoniak, 100 ml 25% Ammoniak und dreimal mit 500 ml ges. NaCl-Lösung gewaschen.

Nach Trocknung über $MgSO_4$ wurde eingedampft, der Rückstand in 1 l Diäthyläther aufgenommen, und die Lösung bei 0° über Nacht stehengelassen. Der dabei ausgeschiedene weisse Festkörper (12 g) wurde durch Filtration entfernt und verworfen. Das Filtrat wurde eingedampft, am Hochvakuum (~ 10 Pa) getrocknet, der erhaltene Rückstand (163 g gelbes Oel) in 300 ml Hexan/Toluol 1:1 aufgenommen und die Lösung über 500 g Kieselgel filtriert. Durch Elution mit zuerst 3 l Hexan und 8 l Hexan/Essigsäureäthylester 9:1 und danach mit 2 l Hexan/Essigsäureäthylester 4:1 und 2 l Hexan/Essigsäureäthylester 7:3 erhielt man nach Trocknung im Hochvakuum (- 10 Pa) während 1 Stunde bei 40° 118 g (3-Methoxyphenyl)phosphonsäure-diphenylester als leicht gelbliches Oel.

db) In einem 1,5 l Vierhalskolben, versehen mit Rührer, Thermometer, Aufsatz für Inertgasbehandlung, Tropftrichter mit Druckausgleich und $CO_2$/Aceton-Kühlbad, wurden 300 ml getrocknetes Tetrahydrofuran vorgelegt. Hierzu wurden 70 ml (0,412 Mol) 2,2,6,6-Tetramethylpiperidin mittels einer Spritze zugefügt, und die Lösung wurde auf -78° abgekühlt. In den Tropftrichter wurden via eine Stahlkanüle 210 ml (0,336 Mol) 1,6N Butyllithium-Lösung in Hexan eingefüllt. Die Butyllitlium-Lösung wurde innerhalb von ca. 10 Minuten in das Reaktionsgefäss eingetropft, wobei die Temperatur bis auf ca. -50° anstieg und ein weisser Niederschlag gebildet wurde. Das $CO_2$/Aceton-Kühlbad wurde durch ein Eis/Aethanol-Bad ersetzt, und die Reaktionsmischung wurde während 30 Minuten bei ca. -15° gerührt, dann wieder auf -78° gekühlt.

In einem separaten 1 l Rundkolben wurden unter Argon 250 ml getrocknetes Tetrahydrofuran und 95,2 g (0,280 Mol) (3-Methoxyphenyl)phosphonsäure-diphenylester (Material aus dab) vorgelegt, und die Lösung wurde auf -78° abgekühlt. Diese Lösung wurde nun via eine Stahlkanüle innerhalb von ca. 10 Minuten in die obige Reaktionsmischung einfliessen gelassen, wobei die Temperatur bis auf ca. -68° anstieg und eine durchscheinende, caramelfarbene Lösung entstand. Diese wurde noch 30 Minuten bei -78° gerührt.

In einem separaten 250 ml Schlenkrohr wurde unter Argon eine Lösung von 71,06 g (0,280 Mol) Jod in 150 ml getrocknetem Tetrahydrofuran hergestellt, und die Lösung wurde via Stahlkanüle in den Tropftrichter der Reaktionsapparatur transferiert. Die Reaktionsmischung wurde nun innerhalb 15 Minuten durch rasches Zutropfen der Jodlösung titriert, wobei die Reaktionstemperatur bis auf -65° anstieg. Nach Zutropfen von ca. 145 ml der ca. 170 ml Jodlösung, als eine rote Färbung der Reaktionsmischung bestehen blieb, wurde die Zugabe abgebrochen und man liess auf 0° erwärmen. Dann wurde die Reaktionsmischung mit 150 ml einer Lösung von 100 g Natriumthiosulfat-Pentahydrat in 200 ml entionisiertem Wasser versetzt, kräftig durchgerührt, und anschliessend mit 100 ml ges. $NaHCO_3$-Lösung versetzt. Das Zweiphasensystem wurde zur Entfernung von gebildetem Niederschlag filtriert und die Phasen getrennt. Die wässrige Phase wurde einmal mit 250 ml Essigsäureäthylester rückextrahiert, und die vereinigten organischen Phasen wurden mit 250 ml ges. NaCl-Lösung gewaschen, über $MgSO_4$ getrocknet und eingedampft. Der Rückstand wurde nochmals in 500 ml Essigsäureäthylester aufgenommen, und die Lösung wurde dreimal mit 250 ml entionisiertem Wasser und mit 250 ml ges. NaCl-Lösung gewaschen, über $MgSO_4$ getrocknet, filtriert und eingeengt. Der Rückstand (118 g gelbes Oel) wurde in 170 ml Toluol aufgenommen und die Lösung mit 115 ml Hexan versetzt, wobei ein weisser Niederschlag ausfiel. Dieser wurde durch Filtration entfernt und das Filtrat wurde auf eine Säule von 450 g Kieselgel aufgetragen. Zunächst wurden mit 2 l Hexan/Essigsäureäthylester 9:1 und 3 l Hexan/Essigsäureäthylester 8:2 Nebenprodukte eluiert. Anschliessend wurden mit 2 l Hexan/Essigsäureäthylester 7:3 die das Endprodukt enthaltenden Fraktionen eluiert. Nach Eindampfen und Trocknen am Hochvakuum (~ 10 Pa) während 1 Stunde bei 60° wurden 76,5 g eines orangen Oels erhalten. Dieses bestand gemäss $^1$H-NMR Analyse aus 75 Mol% (2-Jod-3-methoxyphenyl)phosphonsäure-diphenylester.

<u>Beispiel 2</u>

In zu Beispiel 1 analoger Weise wurden folgende Verbindungen hergestellt:

(RS)-(6,6'-Dimethoxybiphenyl-2,2'-diyl)bis(phosponsäure-diäthylester). Smp. 145-146°.
(S)-(6,6'-Dimethoxybiphenyl-2,2'-diyl)bis(phosponsäure-diäthylester). Smp. 125-126°; $[\alpha]_{D'}^{20}$ = -33,3 (c = 1 in $CHCl_3$).
(R)-(6,6'-Dimethoxybiphenyl-2,2'-diyl)bis(phosponsäure-diäthylester). Smp. 125-126°; $[\alpha]_{D'}^{20}$ = +32,7 (c = 1 in $CHCl_3$).
(2-Jod-3-methoxyphenyl)phosphonsäure-diäthylester, Smp. 99-101°.
(RS)-[6,6'-Bis(methoxymethoxy)biphenyl-2,2'-diyl]bis(phosphonsäure-diphenylester).
(R)-[6,6'-Bis(methoxymethoxy)biphenyl-2,2'-diyl]bis(phosphonsäure-diphenylester). Smp. 119-120°; $[\alpha]_{D'}^{20}$ = -22

(c = 1 in $CHCl_3$).
(S)-[6,6'-Bis(methoxymethoxy)biphenyl-2,2'-diyl]bis(phosphonsäure-diphenylester). Smp. 118-119°; $[\alpha]_D^{20}$ = +20,6 (c = 1 in $CHCl_3$).
[2-Jod-3-(methoxymethoxy)phenyl]phosphonsäure-diphenylester.

Beispiel 3

Eine Lösung von 2,43 g (5,0 mMol) (RS)-(6,6'-Dimethoxyphenyl-2,2'-diyl)-bis(phosphonsäure-diäthylester) (hergestellt gemäss Beispiel 2), 3,63 ml (5,93 g, 50 mMol) Thionylchlorid und 0,38 ml trockenem N,N-Dimethylformamid wurde während 3 Stunden unter Argon am Rückfluss gekocht. Das überschüssige Thionylchlorid wurde anschliessend abdestilliert und der Rückstand am Hochvakuum (- 10 Pa) bei 100° während 1 Stunde getrocknet. Das erhaltene viskose Oel wurde in 15 ml $CH_2Cl_2$ aufgenommen. Nach Filtration von wenig ungelöstem Material wurde das Filtrat mit 20 ml Aether versetzt, wobei ein weisses Pulver ausfiel. Filtration, Waschen mit Aether und Trocknen am Hochvakuum (- 10 Pa) lieferte 1,60 g (RS)-(6,6'-Dimethoxybiphenyl-2,2'diyl)bis(phosphonsäuredichlorid) vom Smp. 195-198°.

In zum Vorhergehenden analoger Weise wurden folgende Verbindungen hergestellt:

(R)-(6,6'-Dimethoxybiphenyl-2,2'-diyl)bis(phosphonsäure-dichlorid). Smp. 172-178°; $[\alpha]_D^{20}$ = +51,3 (c = 1 in $CHCl_3$).
(S)-(6,6'-Dimethoxybiphenyl-2,2'-diyl)bis(phosphonsäure-dichlorid). Smp. 172-178°; $[\alpha]_D^{20}$ = -50,2 (c = 1 in $CHCl_3$).

Beispiel 4

In zu Beispiel 1a) analoger Weise wurde folgende Verbindung hergestellt:
(RS)-(6,6'-Dimethylbiphenyl-2,2'-diyl)bis(phosphonsäure-diäthylester) als gelbliches Oel.
$^1$H-NMR; 250 MHz/$CDCl_3$):7,83 (dd,J=7.5, 14.5, 2 arom. H); 7.45-7.30 (m, 4 arom. H); 4.0-3.6 (m, 2P(OC$\underline{H_2}$$CH_3$)$_2$); 1,99 (s, 2$CH_3$); 1,14 (t, J=7, 2P(O$CH_2$C$\underline{H_3}$)$_2$). MS (198'037): 454 (71, $M^+$), 317 (100, $M^+$-P(O)(OEt)$_2$).

Der hierbei als Ausgangsmaterial verwendete (2-Jod-3-methylphenyl)-phosphonsäure-diäthylester wurde wie folgt hergestellt:

a) Zu einer Lösung von 7,66 g (50 mMol) 3-Methyl-2-nitrophenol in 50 ml Pyridin wurden bei -5° 15,52 g (55 mMol) Trifluormethansulfonsäureanhydrid innerhalb 30 Minuten zugetropft. Die Reaktionsmischung wurde über Nacht bei -5° bis Raumtemperatur gerührt, mit Aether verdünnt und auf Eiswasser gegossen. Die organische Phase wurde abgetrennt, gewaschen mit 1N HCl, ges. $NaHCO_3$- und ges. NaCl-Lösung, über $Na_2SO_4$ getrocknet, filtriert und eingedampft. Der Rückstand wurde mit Hexan/Aether 1:1 filtriert, wonach 12 g Trifluormethansulfonsäure-(2-nitro-3-methylphenylester) als farblose Kristalle vom Smp. 24-26° erhalten wurden.

b) Ein Gemisch von 1,43 g (5,0 mMol) Trifluormethansulfonsäure-(2-nitro-3-methylphenylester), 0,76 g (5,5 mMol) Diäthylphosphit, 0,76 g (7,5 mMol) Triäthylamin, 0,20 g (0,173 mMol) Tetrakis(triphenylphosphin)palladium und 5 ml Toluol wurde während 40 Stunden auf 90° erhitzt. Die dunkelgelbe Lösung wurde mit Aether und $H_2O$ versetzt, die Phasen getrennt, und die organische Phase wurde mit $H_2O$, 2N HCl, ges. $NaHCO_3$- und ges. NaCl- Lösung gewaschen, über $Na_2SO_4$ getrocknet, filtriert und eingedampft. Chromatographie an Kieselgel (Hexan/Essigsäureäthylester 25-40%) lieferte 0,906 g 2-Nitro-3-methylphenylphosphonsäure-diäthylester als gelbe Flüssigkeit.

c) Eine Lösung von 3,62 g (13,25 mMol) 2-Nitro-3-methylphenylphosphonsäure-diäthylester in 50 ml Aethanol wurde in Gegenwart von 200 mg 5% Pd/C unter 1 Atm. H2 hydriert. Nach 6 Stunden wurde mit Essigsäureäthylester verdünnt, über wenig $SiO_2$ filtriert und eingedampft, wonach 3,31 g (2-Amino-3-methylphenyl)phosphonsäure-diäthylester als rötliches Oel erhalten wurden.

d) Zu einer Lösung von 3,31 g (13,25 mMol) (2-Amino-3-methylphenyl)-phosphonsäure-diäthylester in 12 ml 50% $H_2SO_4$ wurde bei 0° eine Lösung von 914 mg (13,25 mMol) $NaNO_2$ in 5 ml $H_2O$ innerhalb 20 Minuten zugetropft. Nach einer zusätzlichen Rührdauer von 10 Minuten wurde die Reaktionsmischung mit 10 ml Aether überschichtet, und es wurde bei 0-5° eine Lösung von 3,30 g (19,88 mMol) KJ in 12,5 ml $H_2O$ zugetropft. Nach beendeter Zugabe wurde mit weiteren 10 ml Aether versetzt, und das Zweiphasensystem wurde noch 2 Stunden bei 0° bis Raumtemperatur gerührt. Zur Aufarbeitung wurde mit wenig $Na_2S_2O_3$ und mit Aether und $H_2O$ versetzt, die Phasen getrennt, und die organische Phase mit 2N HCl, $H_2O$, ges. $NaHCO_3$- und ges. NaCl-Lösung gewaschen, über $Na_2SO_4$ getrocknet, filtriert und eingedampft. Chromatographie an Kieselgel (Hexan/Essigsäureäthylester 1:1), gefolgt von Kristallisation aus 20 ml Hexan/2 ml Aether bei -15° lieferte 3,47 g (2-Jod-3-methylphenyl)phosphonsäure-diäthylester als weisse Kristalle vom Smp. 56-58°.

Beispiel 5

Eine Mischung von 4,40 g (10,1 mMol) (RS)-2,2'-Dijod-6,6'-dimethyl-biphenyl, 75 mg (0,42 mMol) $PdCl_2$ und 4,07 g (24,5 mMol) Triäthylphosphit wurde unter Rühren auf 160° (Badtemperatur) erhitzt. Das entstehende Aethylbromid wurde unter Zuhilfenahme eines leichten $N_2$-Stromes über eine Destillationsbrücke abdestilliert. Das Reaktionsgemisch wurde nach jeweils 1 Stunde mit weiteren drei Portionen zu je 4,07 g (24,5 mMol) Triäthylphosphit versetzt. Nach 5 Stunden wurde der Ueberschuss an Triäthylphosphit am Hochvakuum (-10 Pa) bei 80-100° abdestilliert. Das zurückbleibende braune Oel wurde an Kieselgel chromatographiert (Hexan/Essigsäureäthylester 1:1, dann Essigsäureäthylester/EtOH 0% → 10%), wobei 1,80 g (RS)-(6,6'-Dimethylbiphenyl-2,2'-diyl)bis(phosphonsäure-diäthylester) erhalten wurden. Die Probe zur Analyse wurde noch im Kugelrohr bei ca. 220°(0,2 mbar destilliert.
IR (410 409/120; Film): 1245 (P=O); 1056, 1026 (P-O), 784 (1,2,3-trisubst. Benzol). $^1$H-NMR (303 747; 250 MHz/ $CDCl_3$): 7,83 (dd, J=7,5, 14,5, 2 arom. H); 7,45-7,30 (m. 4 arom. H); 4,03-3,6 (m, 2 $P(O\underline{CH_2}CH_3)_2$); 1,99 (s, 2 $CH_3$); 1,14 (t, J=7, 2 $P(OCH_2\underline{CH_3})_2$).
MS (249 430) : 454 (70, $M^+$), 317 (100, M+-[P(O)(OEt)$_2$]).

Beispiel 6

In einem Schlenkrohr wurden 20 g (46,07 mMol) (RS)-2,2'-Dijod-6,6'-dimethylbiphenyl, 23,72 g (101,3 mMol) Diphenylphosphit, 12 g (119 mMol) Triäthylamin und 2,62 g (2,26 mMol) $Pd(PPh_3)_4$ unter Rühren während 20 Stunden auf 100° erhitzt. Danach wurde das Reaktionsgemisch am Rotationsverdampfer eingeengt, der Rückstand in $CH_2Cl_2$ aufgelöst und mit NaOH-Lösung behandelt. Die organische Phase wurde mit Wasser gewaschen und über $Na_2SO_4$ getrocknet. Der nach Einengen der organischen Phase erhaltene Rückstand wurde aus Methanol umkristallisiert. Man erhielt 21,1 g (RS)-(6,6'-Dimethylbiphenyl-2,2'-diyl)bis(phosphonsäure-diphenylester) als hellbeiges Pulver.
IR (KBr): 1592, 1490, 1277, 1214, 1185, 1157, 926, 764, 733, 687.
$^1$H-NMR (250 MHz, $CDCl_3$): 8,12-6,74 (m, 26 aromat. H), 1,98 (s, 2 aromat. $CH_3$). MS: 646 (0,3, $M^+$); 553 (100, $M^+$-$OC_6H_5$); 413 ($M^+$-$P(O)(O_6H_5)_2$.

Beispiel 7

a) In eine aus 1,57 g (10 mMol) Brombenzol und 243 mg (10 mMol) Magnesiumspänen in 10 ml Tetrahydrofuran bereiteten Phenylmagnesiumbromidlösung wurden bei Raumtemperatur 678 mg (10 mMol) (R)-(6,6'-Dimethoxybiphenyl-2,2'-diyl)bis(phosphonsäure-diphenylester) (hergestellt gemäss Beispiel 1) eingetragen. Die Reaktionsmischung wurde 30 Minuten bei Raumtemperatur gerührt und anschliessend 2 Stunden unter Rückfluss gekocht. Zur Aufarbeitung wurde mit 50 ml ges. $NH_4Cl$-Lösung und 50 ml Essigsäureäthylester versetzt, die Phasen getrennt, und die organische Phase wurde mit ges. NaCl-Lösung gewaschen, über $MgSO_4$ getrocknet, filtriert und eingeengt. Der Rückstand wurde in wenig $CH_2Cl_2$ gelöst und die Lösung auf eine Säule von 50 g Kieselgel aufgetragen. Elution mit Essigsäureäthylester und dann mit Tetrahydrofuran lieferte ein weisses Pulver, welches aus $CH_2Cl_2$/tert.-Butylmethyläther umkristallisiert wurde. Man erhielt 510 mg (R)-(6,6'-Dimethoxybiphenyl-2,2'-diyl)bis (diphenylphosphinoxid). Smp. 337° (Thermoanalyse); $[\alpha]_D{}^{20}$ = +128,4 (c = 1, $CHCl_3$).

b) Ein 0,5 l Vierhalssulfierkolben, versehen mit Kühler, Thermometer, Tropftrichter und mechanischem Rührer, wurde unter Argon mit 4,50 g (6,12 mMol) (R)-(6,6'-Dimethoxybiphenyl-2,2'-diyl)bis(diphenylphosphinoxid), 10 ml (41,9 mMol) Tributylamin, 60 ml Xylol-Isomerengemisch und 4,0 ml (5,37 g, 39,6 mMol) Trichlorsilan beschickt. Die milchigweisse Mischung wurde 4 Stunden unter Rückfluss gekocht, wobei eine beinahe durchscheinende Lösung entstand. Nach Abkühlung wurden unter gutem Rühren 100 ml deoxygenierte 30% Natronlauge so zugetropft, dass die Innentemperatur 70° nicht überstieg, und die Mischung wurde noch 1 Stunde bei 70° gerührt. Nach Zugabe von $H_2O$ und $CH_2Cl_2$ wurden die Phasen getrennt, und die organische Phase wurde mit 2 x 50 ml 30% Natronlauge, $H_2O$, ges. $NH_4Cl$- und NaCl- Lösung gewaschen, über $MgSO_4$ getrocknet, filtriert und eingedampft. Das erhaltene weisse Pulver (4,40 g) wurde in $CH_2Cl_2$ gelöst, die Lösung mit Aethanol versetzt, und das $CH_2Cl_2$ am Rotationsverdampfer abgedampft. Der ausgefallene Festkörper wurde abfiltriert, mit Aethanol und Pentan gewaschen und am Hochvakuum (- 10 Pa) während 1 Stunde bei 100° getrocknet. Man erhielt 3,90 g (R)-(6,6'-Dimethoxybiphenyl-2,2'-diyl)bis(diphenylphosphin) als weisse Kristalle; Smp. 214-215°; $[\alpha]_D{}^{20}$ = +42,4 (c = 1, $CHCl_3$).

In zum Vorhergehenden analoger Weise wurden folgende Verbindungen hergestellt:

(S)-(6,6'-Dimethoxybiphenyl-2,2'-diyl)bis(diphenylphosphinoxid). Smp. 336,5° (Thermoanalyse); $[\alpha]_D^{20}$ = -130,4 (c = 1, $CHCl_3$).
(S)-(6,6'-Dimethoxybiphenyl-2,2'-diyl)bis(diphenylphosphin). Smp. 214-215°; $[\alpha]_D^{20}$ = -41,7 (c = 1, $CHCl_3$).
(RS)-(6,6'-Dimethoxybiphenyl-2,2'-diyl)bis(di-p-tolylphosphinoxid). Smp. 300° (Thermoanalyse).
(RS)-(6,6'-Dimethoxybiphenyl-2,2'-diyl)bis(di-p-tolylphosphin). Smp. 247-249°.
(R)-(6,6'-Dimethoxybiphenyl-2,2'-diyl)bis(di-p-tolylphosphinoxid). Smp. 318°; $[\alpha]_D^{20}$ = +103,5 (c = 1, $CHCl_3$).
(S)-(6,6'-Dirnethoxybiphenyl-2,2'-diyl)bis(di-p-tolylphosphinoxid). Smp. 321°; $[\alpha]_D^{20}$ = -105 (c = 1, $CHCl_3$).
(R)-(6,6'-Dimethoxybiphenyl-2,2'-diyl)bis(di-p-tolylphosphin). Smp. 209-210°; $[\alpha]_D^{20}$ = +33,2 (c = 1, $CHCl_3$).
(S)-(6,6'-Dimethoxybiphenyl-2,2'-diyl)bis(di-p-tolylphosphin). Smp. 208-209°; $[\alpha]_D^{20}$ = -32,5 (c = 1, $CHCl_3$).
(RS)-(6,6'-Dimethoxybiphenyl-2,2'-diyl)bis[bis(p-methoxyphenyl)phosphinoxid]. Smp. 282-283°.
(RS)-(6,6'-Dimethoxybiphenyl-2,2'-diyl)bis[bis(p-methoxyphenyl)phosphin].
(R)-(6,6'-Dimethoxybiphenyl-2,2'-diyl)bis[bis(p-methoxyphenyl)phosphinoxid]. Smp. 213-214°; $[\alpha]_D^{20}$ = +92,5 (c = 1, $CHCl_3$).
(S)-(6,6'-Dimethoxybiphenyl-2,2'-diyl)bis[bis(p-methoxyphenyl)phosphinoxid]. Smp. 207-208°; $[\alpha]_D^{20}$ = -93,6 (c = 1, $CHCl_3$).
(R)-(6,6'-Dimethoxybiphenyl-2,2'-diyl)bis[bis(p-methoxyphenyl)phosphin]. Smp. 225-226°; $[\alpha]_D^{20}$ = +7,5 (c = 1, $CHCl_3$).
(S)-(6,6'-Dimethoxybiphenyl-2,2'-diyl)bis[bis(p-methoxyphenyl)phosphin]. Smp. 225-226°; $[\alpha]_D^{20}$ = -7,3 (c = 1, $CHCl_3$).
(R)-(6,6'-Dimethoxybiphenyl-2,2'-diyl)bis(di-4-biphenylphosphinoxid).
(S)-(6,6'-Dimethoxybiphenyl-2,2'-diyl)bis(di-4-biphenylphosphinoxid).
(R)-(6,6'-Dimethoxybiphenyl-2,2'-diyl)bis(di-4-biphenylphosphin). $[\alpha]_D^{20}$ = +39 (c = 1, $CHCl_3$).
(S)-(6,6'-Dimethoxybiphenyl-2,2'-diyl)bis(di-4-biphenylphosphin). $[\alpha]_D$ = -39,4 (c = 1, $CHCl_3$).

Beispiel 8

a) Eine aus 1,57 g (10,0 mMol) Brombenzol und 0,243 g (10,0 mMol) Magnesiumspänen in 10 ml Tetrahydrofuran bereitete Phenylmagnesiumbromid-Lösung wurde bei -78° zu einer Lösung von 448 mg (1,0 mMol) (R)-(6,6'-Dimethoxybiphenyl-2,2'-diyl)bis(phosphonsäure-dichlorid) in 100 ml Tetrahydrofuran getropft. Nach beendeter Zugabe wurde das Kühlbad entfernt und man liess die Reaktionsmischung auf Raumtemperatur erwärmen. Zur Aufarbeitung wurde mit ges. NH4Cl-Lösung versetzt, die organische Phase abgetrennt, mit ges. NaCl-Lösung gewaschen, über $Na_2SO_4$ getrocknet, filtriert und eingedampft. Der Rückstand wurde in $CH_2Cl_2$ aufgenommen, die Lösung mit Essigsäureäthylester versetzt und das $CH_2Cl_2$ wurde am Rotationsverdampfer abgedampft. Filtration und Trocknung lieferte 0,50 g (R)-(6,6'-Dimethoxybiphenyl-2,2'-diyl)bis(diphenylphosphinoxid) als weisses Pulver; $[\alpha]_D^{20}$ = +127,7 (c = 1, $CHCl_3$).

b) Die Reduktion dieses Phosphinoxides in zu Beispiel 6 analoger Weise ergab (R)-(6,6'-Dimethoxybiphenyl-2,2'-diyl)bis(diphenylphosphin).

**Patentansprüche**

1. Racemische und optisch aktive Phosphorverbindungen der allgemeinen Formel

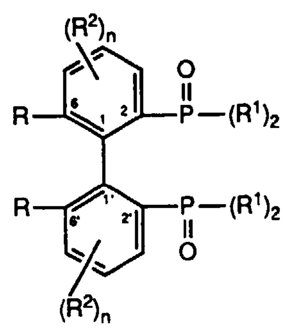

I

worin R niederes Alkyl, niederes Alkoxy mit je 1 bis 4 Kohlenstoffatomen oder eine geschützte Hydroxygruppe bedeutet, $R^1$ niederes Alkoxy mit 1 bis 4 Kohlenstoffatomen, Phenoxy oder Benzyloxy, in welchen der Phenylrest sowohl unsubstituiert als auch in meta- oder para-Stellung oder auch mehrfach mit Methyl substituiert sein kann, oder Chlor oder Brom bedeutet, $R^2$ für niederes Alkyl oder niederes Alkoxy mit je 1 bis 4 Kohlenstoffatomen steht

und n die Zahl 0, 1 oder 2 darstellt.

2. Racemische und optisch aktive Phosphorverbindungen gemäss Anspruch 1, worin n für die Zahl 0 steht.

3. Racemische und optisch aktive Phosphorverbindungen gemäss Anspruch 1 oder 2, worin $R^1$ Phenoxy, Aethoxy oder Chlor und R Methoxy, Methoxymethyl oder Methyl bedeuten.

4. (RS)-, (R)- oder (S)-(6,6'-Dimethoxybiphenyl-2,2'-diyl)bis(phosphonsäure-diphenylester).

5. (RS)-, (R)- oder (S)-(6,6'-Dimethoxybiphenyl-2,2'-diyl)bis(phosphonsäure-diäthylester).

6. (RS)-, (R)- oder (S)-(6,6'-Dimethylbiphenyl-2,2'-diyl)bis(phosphonsäurediphenylester).

7. (RS)-, (R)- oder (S)-(6,6'-Dimethylbiphenyl-2,2'-diyl)bis(phosphonsäurediäthylester).

8. (RS)-, (R)- oder (S)-(6,6'-Dimethoxybiphenyl-2,2'-diyl)bis(phosphonsäure-dichlorid).

9. Verfahren zur Herstellung von racemischen bzw. optisch aktiven Phosphorverbindungen der allgemeinen Formel

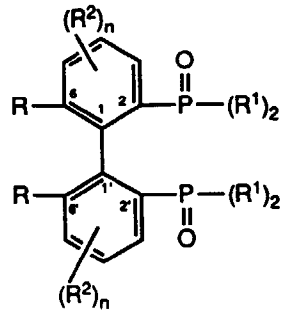

I

worin R niederes Alkyl, niederes Alkoxy mit je 1 bis 4 Kohlenstoffatomen oder geschütztes Hydroxy bedeutet, $R^1$ niederes Alkoxy mit 1 bis 4 Kohlenstoffatomen, Phenoxy oder Benzyloxy, in welchen der Phenylrest sowohl unsubstituiert als auch in meta- oder para-Stellung oder auch mehrfach mit Methyl substituiert sein kann, oder Chlor oder Brom bedeutet, $R^2$ für niederes Alkyl oder niederes Alkoxy mit je 1 bis 4 Kohlenstoffatomen steht und n die Zahl 0, 1 oder 2 darstellt,
dadurch gekennzeichnet, dass man eine Verbindung der Formel

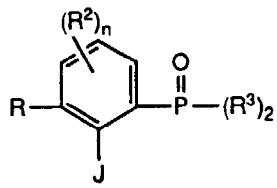

II

worin R, $R^2$ und n obige Bedeutung haben, und $R^3$ niederes Alkoxy, Phenoxy oder Benzyloxy bedeutet, einer Ullmann-Kopplung unterwirft, dass man, gewünschtenfalls, eine so erhaltene, in der (RS)-Form vorliegende Verbindung der Formel

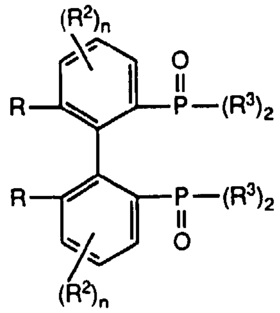

III

worin R, $R^2$, $R^3$ und n obige Bedeutung haben,
mittels Dibenzoylweinsäure oder Di-p-Toluylweinsäure in die (R)- und (S)-Form auftrennt, und dass man, gewünschtenfalls, in einer racemischen oder optisch aktiven Verbindung der Formel III, worin $R^3$ niederes Alkoxy darstellt, dieses durch Chlor oder Brom ersetzt.

## Claims

1. Racemic and optically active phosphorus compounds of the general formula

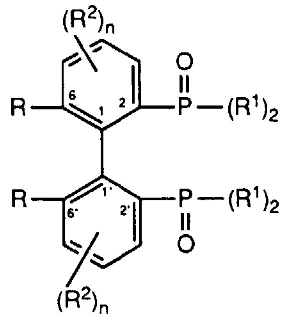

I

wherein R signifies lower alkyl [or] lower alkoxy with in each case 1 to 4 carbon atoms or protected hydroxy, $R^1$ signifies lower alkoxy with 1 to 4 carbon atoms, phenoxy or benzyloxy, in which the phenyl residue can be not only unsubstituted but also substituted in the meta- or para-position or also poly-substituted with methyl or chlorine or bromine, $R^2$ stands for lower alkyl or lower alkoxy with in each case 1 to 4 carbon atoms and n represents the number 0,1 or 2.

2. Racemic and optically active phosphorus compounds in accordance with claim 1, wherein n stands for the number 0.

3. Racemic and optically active phosphorus compounds in accordance with claim 1 or 2, wherein $R^1$ signifies phenoxy, ethoxy or chlorine and R signifies methoxy, methoxymethyl or methyl.

4. (RS)-, (R)- or (S)-(6,6'-Dimethoxybiphenyl-2,2'-diyl)bis(phosphonic acid diphenyl ester).

5. (RS)-, (R)- or (S)-(6,6'-Dimethoxybiphenyl-2,2'-diyl)bis(phosphonic acid diethyl ester).

6. (RS)-, (R)- or (S)-(6,6'-Dimethylbiphenyl-2,2'-diyl)bis(phosphonic acid diphenyl ester).

7. (RS)-, (R)- or (S)-(6,6'-Dimethylbiphenyl-2,2'-diyl)bis(phosphonic acid diethyl ester).

8. (RS)-, (R)- or (S)-(6,6'-Dimethoxybiphenyl-2,2'-diyl)bis(phosphonic acid dichloride).

9. A process for the manufacture of racemic or optically active phosphorus compounds of the general formula

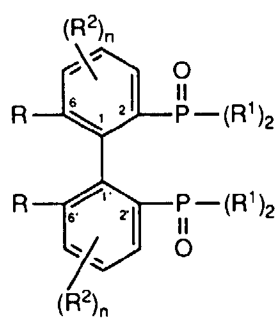

I

wherein R signifies lower alkyl [or] lower alkoxy with in each case 1 to 4 carbon atoms or protected hydroxy, $R^1$ signifies lower alkoxy with 1 to 4 carbon atoms, phenoxy or benzyloxy, in which the phenyl residue can be not only unsubstituted but also substituted in the meta- or para-position or also poly-substituted with methyl, or chlorine or bromine, $R^2$ stands for lower alkyl or lower alkoxy with in each case 1 to 4 carbon atoms and n represents the number 0, 1 or 2,
characterized by subjecting a compound of the formula

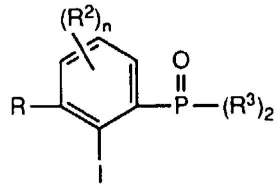

II

wherein R, $R^2$ and n have the above significance and $R^3$ signifies lower alkoxy, phenoxy or benzyloxy, to an Ullmann coupling, if desired resolving a thus-obtained compound of the formula

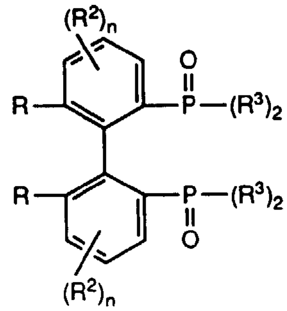

III

wherein R, $R^2$, $R^3$ and n have the above significance, which is present in the (RS) form into the (R) form and (S) form using dibenzoyltartaric acid or di-p-toluyltartaric acid and, if desired, replacing a lower alkoxy group denoted by $R^3$ in a racemic or optically active compound of formula III by chlorine or bromine.

**Revendications**

1. Composés phosphorés racémiques et optiquement actifs de formule générale

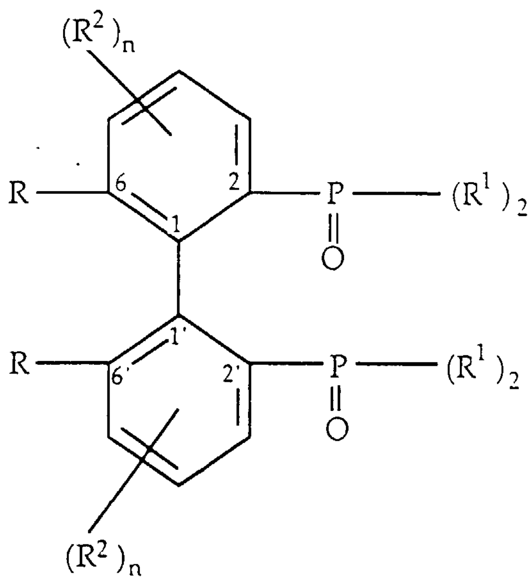

(I)

où R représente un alkyle inférieur comportant 1 à 4 atomes de carbone, un alcoxy inférieur comportant 1 à 4 atomes de carbone ou un groupe hydroxy protégé, $R^1$ représente un alcoxy inférieur comportant 1 à 4 atomes de carbone, un phénoxy ou un benzyloxy dans lequel le reste phényle peut être aussi bien non substitué que substitué en position méta ou para ou également polysubstitué par le méthyle ou $R^1$ représente le chlore ou le brome, $R^2$ représente un alkyle inférieur ou un alcoxy inférieur comportant 1 à 4 atomes de carbone et n est égal à 0, 1 ou 2.

2. Composés phosphorés racémiques et optiquement actifs selon la revendication 1 où n est égal à 0.

3. Composés phosphorés racémiques et optiquement actifs selon la revendication 1 ou 2, où $R^1$ représente le phé-

noxy, l'éthoxy ou le chlore et R représente le méthoxy, le méthoxyméthyle ou le méthyle.

**4.** L'ester diphénylique de l'acide (RS)-, (R)- ou (S)-(6,6'-diméthoxy-biphényl-2,2'-diyl)-bis-(phosphonique).

**5.** L'ester diéthylique de l'acide (RS)-, (R)- ou (S)(6,6'-diméthoxy-biphényl-2,2'-diyl)-bis-(phosphonique).

**6.** L'ester diphénylique de l'acide (RS)-, (R)- ou (S)-(6,6'-diméthyl-biphényl-2,2'-diyl)-bis-(phosphonique).

**7.** L'ester diéthylique de l'acide (RS)-, (R)- ou (S)-(6,6'-diméthyl-biphényl-2,2'-diyl)-bis-(phosphonique).

**8.** Le dichlorure de l'acide (RS)-, (R)- oui (S)-(6,6'-diméthoxybiphényl-2,2'-diyl)-bis-(phosphonique).

**9.** Procédé pour la préparation des composés phosphorés racémiques ou optiquement actifs de formule générale

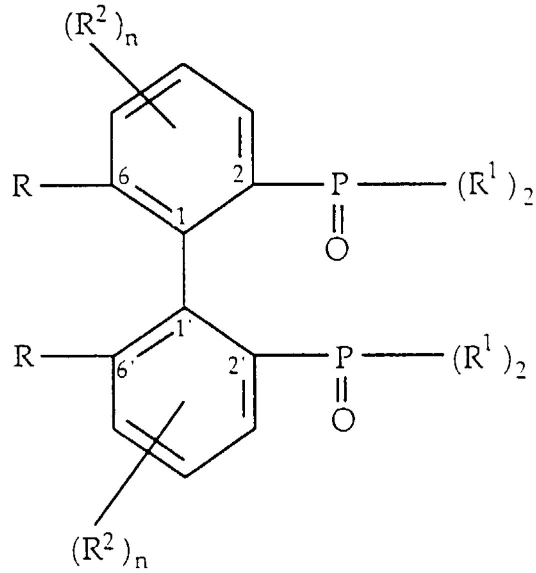

(I)

où R représente un alkyle inférieur comportant 1 à 4 atomes de carbone, un alcoxy inférieur comportant 1 à 4 atomes de carbone ou un groupe hydroxy protégé, $R^1$ représente un alcoxy inférieur comportant 1 à 4 atomes de carbone, un phénoxy ou un benzyloxy dans lequel le reste phényle peut être aussi bien non substitué que substitué en position méta ou para ou également polysubstitué par le méthyle ou $R^1$ représente le chlore ou le brome, $R^2$ représente un alkyle inférieur ou un alcoxy inférieur comportant 1 à 4 atomes de carbone et n est égal à 0, 1 ou 2, caractérisé en ce que l'on soumet un composé de formule

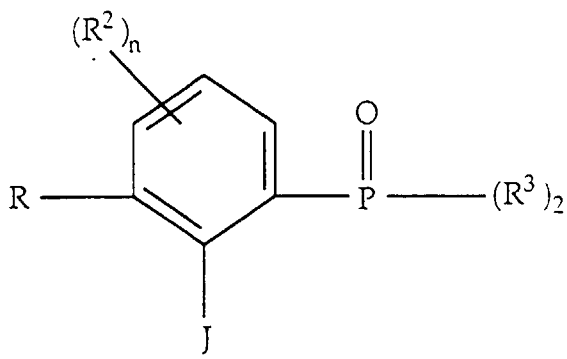

(II)

où R, $R^2$ et n ont les significations ci-dessus et $R^3$ représente un alcoxy inférieur, le phénoxy ou le benzyloxy, à un couplage d'Ullmann, en ce que l'on sépare, si désiré, le composé ainsi obtenu, se présentant sous la forme (RS), de formule

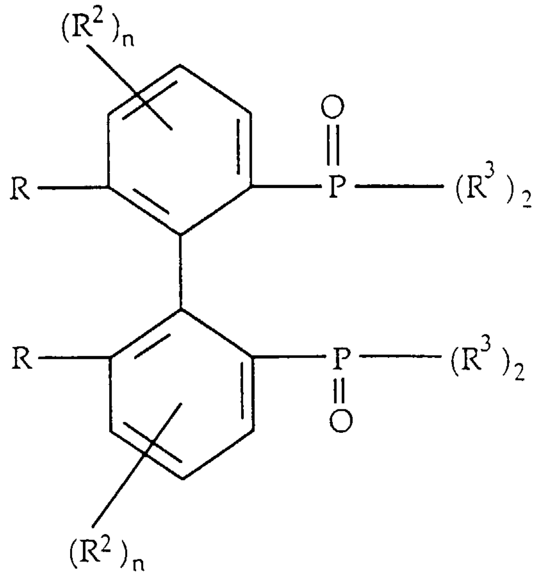

(III)

où R, $R^2$, $R^3$ et n ont les significations ci-dessus, en les formes (R) et (S) à l'aide de l'acide dibenzoyltartrique ou de l'acide di-p-toluyltartrique, et en ce que l'on remplace, si désiré, dans un composé racémique ou optiquement actif de formule III où $R^3$ représente un alcoxy inférieur, celui-ci par le chlore ou le brome.